# EUROPEAN PATENT SPECIFICATION

(11) **EP 1 042 888 B1**
(45) Date of publication and mention of the grant of the patent: **01.03.2006**
(21) Application number: 98962465.5
(22) Date of filing: 29.12.1998
(51) Int. Cl.: H04L 12/66

(54) **SUBSCRIBER DATA HANDLING IN TELECOMMUNICATIONS NETWORKS**
TEILNEHMERDATENBEHANDLUNG IN TELEKOMMUNIKATIONSNETZWERKEN
TRAITEMENT DE "DONNEES ABONNES" DANS UN RESEAU DE TELECOMMUNICATIONS

(30) Priority: 31.12.1997 FI 974655
(43) Date of publication of application: 11.10.2000
(73) Proprietor: TeliaSonera Finland Oyj, 00510 Helsinki (FI)
(72) Inventor: JAAKKOLA, Jorma, FIN-01760 Vantaa (FI); SARKKI, Mika, FIN-01600 Vantaa (FI)
(74) Representative: Simmelvuo, Markku Kalevi
(86) International application number: PCT/FI1998/001026
(87) International publication number: WO 1999/035794

(56) References cited:
- WO-A1-95/09514
- WO-A1-96/38018

## Description

The present invention relates to telecommunication. In particular, the invention relates to a new and advanced method and system for the management of subscriber data in telecommunication networks.

A problem with the services provided at present via various networks (e.g. GSM, Global System for Mobile communications; PSTN, Public Switched Telephone Network; Internet) is that they are designed to work only in a particular network. Each network has different practices for the handling of subscriber data. Locating services are tied to their target network and the accessibility of a person can only be treated within a given network. A person may be accessible e.g. via the Internet at a location where no paging network can be used.

Prior art includes WO 96/38018 which discloses a method and system for setting up a speech connection in different networks. The system comprises an ISDN-network having access through an intelligent network service switching point to services offered by an intelligent network service control point, a data network, in which at least one computer has a data network-address, and a gateway connecting the networks.

The object of the present invention is to eliminate the problem described above. A specific object of the present invention is to disclose a new type of system and procedure in which subscriber data and above-mentioned services are available between different networks and in which the services can be directed to use the network currently used by the subscriber irrespective of the network interface. The invention makes it possible to create e.g. an accessibility service between different networks.

As for the features characteristic of the present invention, reference is made to the claims.

The system of the invention transmits and modifies subscriber data in conjunction with at least two duplex telecommunication networks handling different subscriber data, each of the different subscriber data comprising subscriber's location data and service data. The telecommunication network is e.g. a public telephone network, a digital multi-service network, a public mobile communication network, a paging network, a message service network, a telex network or an IP-based network (IP, Internet Protocol). The system comprises means for connecting the system, transparently in respect of the telecommunication system architecture, to telecommunication network elements handling subscriber data. 'Transparently' here means that the system does not require any changes in the architecture of the existing networks.

The system comprises means for storing the subscriber data for different telecommunication networks in a logically single database. The data of the database may be distributed in different elements while still essentially forming part of an entity interpreted as a single database.

The system comprises means for exchanging subscriber data at least one of (i) between the subscriber data handling telecommunication network elements of different telecommunication networks, (ii) between the logically single database and the subscriber data handling telecommunication network elements of the telecommunication networks, and (iii) between the subscriber data handling telecommunication network elements of a single telecommunication network. Examples of exchangeable data are data indicating the subscriber's location and in which network and at what time the subscriber can be reached, or subscriber-specific service data, including the services used by the subscriber.

In a preferred embodiment of the invention, the system comprises means for the transmission of signalling between different telecommunication networks.

In a preferred embodiment of the invention, the system comprises means for converting data types so that the data type of the subscriber data is compatible with the database comprised in the system and with the data types of the network element of the telecommunication network linked to the system.

In a preferred embodiment of the invention, the system comprises means for forming a service profile for the subscriber. From the service data for each subscriber, it is possible to determine the network and service that the subscriber prefers to use.

In a preferred embodiment of the invention, the system comprises means for ensuring uninterrupted operation. The system is a critical component as regards network-independent services.

In a preferred embodiment of the invention, the system is implemented in the terminal device. In this case, the services are implemented and activated separately in each terminal device of the subscriber, taking the properties of each network into account.

In a preferred embodiment of the invention, a means comprised in the system is implemented as a part of a network element. The means comprised in the system may also be implemented as a module which is added to a network element of an existing telecommunication network.

The system of the invention provides the advantage of a uniform external interface to service user information for use e.g. in customer management systems. The system makes it possible to create a new and more advanced accessibility service in which the subscriber can be reached via a single interface from different telecommunication networks. The system saves network capacity. Subscriber search from other networks can be accomplished as a simple database search without setting up a complete telecommunication connection. Subscriber data can be practically managed in real time as the system is connected with elements exchanging subscriber data. In other words, a search service can be implemented as a simple exchange of characters.

In the following, the invention will be described by the aid of a few examples of its embodiments by referring to the attached drawing, wherein
Fig. 1 is a diagrammatic representation of a system according to the invention, and
Fig. 2 presents another embodiment of the invention, connected as a part of existing network elements.

As an example, the handling of subscriber location data will be now described. When the system 2 of the invention is added to the GSM network 3, it is connected between the MSC/VLR 4 (MSC/VLR, Mobile services Switching Center/Visitor Location Register) and the HLR 5 (HLR, Home Location Register) via means 1a. When the MSC/VLR 4 exchanges information with the HLR 5, the communication is transmitted via the system 2, which picks out the required data from the communication and transmits the communication further to the HLR 5 without altering the messages between the MSC 4 and the HLR 5. Thus, the system 2 has obtained subscriber location data from the communication between the MSC/VLR and the HLR in the GSM network 3 by filtering.

The location information is stored in the database 12 of the system 2 by using means 13. This information could be utilised e.g. in an intelligent network service (IN, Intelligent Network) provided in a PSTN network 6, in which a service control point 7 (SCP, Service Control Point) sends a subscriber data inquiry to a service data point 8 (SDP, Service Data Point). Instead of being passed to the data point 8, the inquiry is directed using means 1b to the system 2, which may return the subscriber data immediately or direct the original inquiry to the service data point 8. After receiving a response from the service data point 8, the system 2 can add desired information to the data obtained from the service data point 8 and return the response to the service control point 7.

A corresponding practice can also be applied in a TCP/IP network 9 (TCP/IP, Transmission Control Protocol/Internet Protocol), where the system can be used as a server for various directory services. In an example, the system 2 is connected between a terminal 11 and a gatekeeper 10 as defined by the ITU H.323 standard series (ITU, International Telecommunications Union) via means 1c. The terminal logs on into the gatekeeper 10 and queries for information concerning call setup. The communication is transmitted via the system, which filters the required data from it. Exchange of information between the terminal 11 and the gatekeeper 10 works in the same way as in a network in which the system 2 of the invention is not used.

By the method described above, it is possible to implement an accessibility service that is considerably more advanced than present systems. When someone is trying to reach a subscriber e.g. via the GSM network, he/she may leave a message in the subscriber's telephone answering machine. Based on the subscriber's service profile formed using means 15, this message is transferred to the network considered best, e.g. to the Internet, where the message left in the answering machine is converted into an electronic mail message. The system 2 always contains information about the subscriber data of each network; for instance, a subscriber's location can be determined from the location data so that it can be used e.g. in an answering service.

The load on the system of the invention can be managed because, in present networks, subscribers can be distributed among different network components containing subscriber data so that only data for subscribers using network-independent services and the associated search and processing operations are routed via the system by using suitable signalling. The system 2 is provided with means 14 for the transmission of signalling.

The essential point about the system 2 is that it concentrates subscriber data, location and service data in the same system with the signalling of different telecommunication networks. The system 2 functions as a gateway between different networks. Since the subscriber data of all the networks that have joined the system are collected in the same database, a telecommunication connection between two different networks can be set up directly between the networks without having to check the subscriber data via a third network. In practice the system 2 also works in real time, thus differing from prior-art procedures in which subscriber data are handled by a batch processing method, collecting subscriber data for several subscribers at the same time.

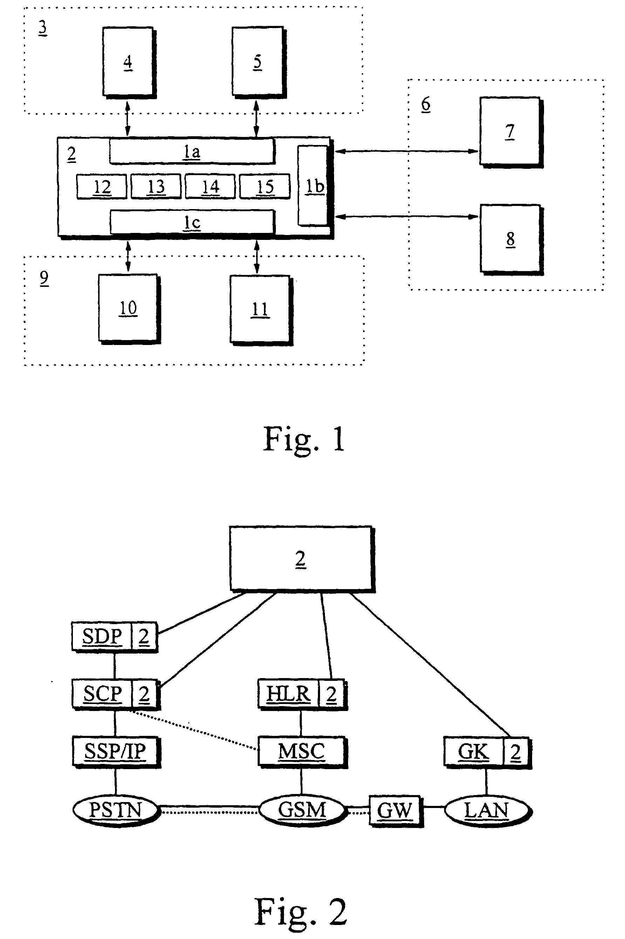

Fig. 2 presents a system according to the invention the invention, in which the means used in the system 2 are implemented as a part of the existing network elements. The system 2 is physically distributed as additional modules built into different network elements implementing the functions of the system 2.

## Claims

1. System (2) for the management of subscriber data in conjunction with at least two duplex telecommunication networks (3, 6, 9) handling different subscriber data, each of the different subscriber data comprising subscriber's location data and service data, **characterised in that** the system (2) comprises
- means (la, 1b, 1c) for linking the system (2) to telecommunication network elements (4, 5, 7, 8, 10, 11) handling subscriber data without changing the architecture of said telecommunication networks (3, 6, 9),
- means for storing the subscriber data of different telecommunication networks (3, 6, 9) in a logically single database (12), and
- means (13) for exchanging subscriber data at least one of :
(i) between the subscriber data handling telecommunication network elements (4, 5, 7, 8, 10, 11) of different telecommunication networks (3, 6, 9),
(ii) between the logically single database (12) and the subscriber data handling telecommunication network elements (4, 5, 7, 8, 10, 11) of the telecommunication networks (3, 6, 9), and
(iii) between the subscriber data handling telecommunication network elements (4, 5) of a single telecommunication network (3).

2. System as defined in claim 1, **characterised i**n that the system (2) comprises means (14) for the transmission of signalling between different telecommunication networks (3, 6, 9).

3. System as defined in claim 1 or 2, **characterised in that** the system (2) comprises means (1) for converting data types between the telecommunication network (3, 6, 9) and the database (12).

4. System as defined in any one of claims 1 - 3, **characterised in that** the system (2) comprises means (15) for forming a service profile for the subscriber.

5. System as defined in any one of claims 1 - 4, **characterised in that** a means comprised in the system (2) is implemented as a part of a network element.

6. System as defined in any one of claims 1 - 5, **characterised in that** the system (2) is implemented in a terminal device.

7. Procedure for the management of subscriber data in conjunction with at least two duplex telecommunication networks (3, 6, 9) handling separate subscriber data, each of the separate subscriber data comprising subscriber's location data and service data, **characterised in that**
- a connection is established to telecommunication network elements (4, 5, 7, 8, 10, 11) handling subscriber data without changing the architecture of said telecommunication networks (3, 6, 9),
- the subscriber data for different telecommunication networks (3, 6, 9) are stored in a logically single database (12),
- subscriber data are exchanged at least one of :
(i) between the subscriber data handling telecommunication network elements (4, 5, 7, 8, 10, 11) of different telecommunication networks (3, 6, 9),
(ii) between the logically single database (12) and the subscriber data handling telecommunication network elements (4, 5, 7, 8, 10, 11) of the telecommunication networks (3, 6, 9), and
(iii) between the subscriber data handling telecommunication network elements (4, 5) of a single telecommunication network (3).

8. Procedure as defined in claim 7, **char- acterised in that** signalling is transmitted between different telecommunication networks (3, 6, 9).

9. Procedure as defined in claim 7 or 8, **characterised in** data types are converted between the telecommunication network (3, 6, 9) and the database (12).

10. Procedure as defined in any one of claims 7-9, **characterised in that** a service profile for the subscriber is formed.

## Revendications

1. Système (2) pour la gestion de données d'abonnés relatives à au moins deux réseaux de télécommunications en duplex (3, 6, 9) prenant en charge des données d'abonnés différentes, chacune des données d'abonnés différentes comprenant des données de position et des données de services d'un abonné, **caractérisé en ce que** le système (2) comprend :
- des moyens (1a, 1b, 1c) pour relier le système (2) à des éléments (4, 5, 7, 8, 10, 11) de réseau de télécommunications prenant en charge des données d'abonnés sans modifier l'architecture desdits réseaux de télécommunications (3, 6, 9) ;
- des moyens pour stocker les données d'abonnés de différents réseaux de télécommunications (3, 6, 9) dans une base de données (12) logiquement unique ; et
- des moyens (13) pour échanger des données d'abonnés au niveau au moins de l'un :
(i) d'entre les données d'abonnés prenant en charge des éléments (4, 5, 7, 8, 10, 11) de réseau de télécommunications de différents réseaux de télécommunications (3, 6, 9) ;
(ii) d'entre la base de données (12) logiquement unique et les données d'abonnés prenant en charge des éléments (4, 5, 7, 8, 10, 11) de réseau de télécommunications des réseaux de télécommunications (3, 6, 9) ; et
(iii) d'entre les données d'abonnés prenant en charge des éléments (4, 5) de réseau de télécommunications d'un unique réseau de télécommunications (3).

2. Système selon la revendication 1, **caractérisé en ce que** le système (2) comprend des moyens (14) pour la transmission de signaux entre différents réseaux de télécommunications (3, 6, 9).

3. Système selon la revendication 1 ou 2, **caractérisé en ce que** le système (2) comprend des moyens (1) pour convertir des types de données entre le réseau de télécommunications (3, 6, 9) et la base de données (12).

4. Système selon l'une quelconque des revendications 1 à 3, **caractérisé en ce que** le système (2) comprend des moyens (15) pour former un profil de service relatif à l'abonné.

5. Système selon l'une quelconque des revendications 1 à 4, **caractérisé en ce que** des moyens intégrés dans le système (2) sont mis en oeuvre en tant qu'une partie d'un élément de réseau.

6. Système selon l'une quelconque des revendications 1 à 5, **caractérisé en ce que** le système (2) est mis en oeuvre en tant qu'un dispositif formant terminal.

7. Procédé pour la gestion de données d'abonnés relatives à au moins deux réseaux de télécommunications en duplex (3, 6, 9) prenant en charge des données d'abonnés distinctes, chacune des données d'abonnés distinctes comprenant des données de position et des données de services d'un abonné,
**caractérisé en ce que** :
- une connexion est établie avec des éléments (4, 5, 7, 8, 10, 11) de réseau de télécommunications prenant en charge des données d'abonnés sans modifier l'architecture desdits réseaux de télécommunications (3, 6, 9) ;
- les données d'abonnés pour différents réseaux de télécommunications (3, 6, 9) sont stockées dans une base de données (12) logiquement unique ;
- des données d'abonnés sont échangées au niveau au moins de l'un :
(i) d'entre les données d'abonnés prenant en charge des éléments (4, 5, 7, 8, 10, 11) de réseau de télécommunications de différents réseaux de télécommunications (3, 6, 9) ;
(ii) d'entre la base de données (12) logiquement unique et les données d'abonnés prenant en charge des éléments (4, 5, 7, 8, 10, 11) de réseaux de télécommunications des réseaux de télécommunications (3, 6, 9) ; et
(iii) d'entre les données d'abonnés prenant en charge des éléments (4, 5) de réseau de télécommunications d'un unique réseau de télécommunications (3).

8. Procédé selon la revendication 7, **caractérisé en ce que** des signaux sont transmis entre différents réseaux de télécommunications (3, 6, 9).

9. Procédé selon la revendication 7 ou 8, **caractérisé en ce que** des types de données sont convertis entre le réseau de télécommunications (3, 6, 9) et la base de données (12).

10. Procédé selon l'une quelconque des revendications 7 à 9, **caractérisé en ce qu'**un profil de service relatif à l'abonné est formé.

## Patentansprüche

1. System (2) zum Managen von Teilnehmerdaten in Verbindung mit wenigstens zwei Duplex-Telekommunikationsnetzwerken (3,6,9), welche unterschiedliche Teilnehmerdaten behandeln, wobei jede der unterschiedlichen Teilnehmerdaten Standort- bzw. Geometriedaten und Servicedaten aufweist, **dadurch gekennzeichnet, dass** das System (2) aufweist:
- eine Vorrichtung (1a, 1 b, 1 c) zum Anschliessen des Systems(2) an Telekommunikationsnetzwerkelemente (4, 5, 7, 8, 10, 11), welche die Teilnehmerdaten ohne Verändern der Architektur der Telekommunikationsnetzwerke (3, 6, 9) behandeln,
- eine Vorrichtung zum Speichern der Teilnehmerdaten unterschiedlicher Telekommunikationsnetzwerke (3, 6, 9) in einer einzelnen logischen Datenbank (12), und
- eine Vorrichtung (13) zum Austauschen von Teilnehmerdaten, wenigstens entsprechend einer Art aus folgenden:
(i) zwischen Teünehmerdaten, welche Telekommunikationsnetzwerkelemente (4, 5, 7, 8, 10, 11) unterschiedlicher Telekommunikationsnetzwerke (3, 6, 9) behandeln,
(ii)zwischen der einzelnen logischen Datenbank (12) und den Teilnehmerdaten, welche die Telekommunikationsnetzwerkelemente (4, 5, 7, 8, 10, 11) der Telekommunikationsnetzwerke (3, 6, 9) behandeln, und
(iii) zwischen den Teilnehmerdaten, welche die Telekommunikationsnetzwerkelemente (4, 5) eines einzelnen Telekommunikationsnetzwerkes (3) behandeln.

2. System nach Anspruch 1,**dadurch gekennzeichnet, dass** das System (2) eine Vorrichtung (14) für die Übertragung von Zeichengaben zwischen unterschiedlichen Telekommunikationsnetzwerken (3, 6, 9) aufweist.

3. System nach Anspruch 1 oder 2, **dadurch gekennzeichnet, dass** das System (2) eine Vorrichtung (1) zum Umwandeln von Datentypen zwischen dem Telekommunikationsnetzwerk (3, 6, 9) und der Datenbank (12) aufweist.

4. System nach einem der Ansprüche 1 - 3,
**dadurch gekennzeichnet, dass** das System (2) eine Vorrichtung (15) zum Bilden eines Serviceprofils für den Teilnehmer aufweist.

5. System nach einem der Ansprüche 1 - 4,
**dadurch gekennzeichnet , dass** eine Vorrichtung, welche das System (2) aufweist, als ein Teil eines Netzwerkelements implementiert ist.

6. System nach nach einem der Ansprüche 1 - 5,
**dadurch gekennzeichnet, dass** das System (2) in einem Endgerät implementiert ist.

7. Verfahren zum Managen von Teilnehmerdaten in Verbindung mit wenigstens zwei Duplex-Telekommunikationsnetzwerken (3,6,9), welche getrennte Teilnehmerdaten behandeln, wobei die jeweiligen der getrennten Teilnehmerdaten die Standort- bzw. Geometriedaten und die Servicedaten des Teilnehmers aufweisen, **dadurch gekennzeichnet, dass**
- eine Verbindung zu den Telekommunikationsnetzwerkelementen (4, 5, 7, 8, 10, 11) erstellt wird, welche die Teilnehmerdaten ohne Verändern der Architektur der Telekommunikationsnetzwerke (3, 6, 9) behandelt,
- die Teilnehmerdaten für unterschiedliche Telekommunikationsnetzwerke (3, 6, 9) in einer einzelnen logischen Datenbank (12) gespeichert werden,
- die Teilnehmerdaten wenigstens entsprechend einer Art aus folgenden ausgetauscht werden:
(i) zwischen Teilnehmerdaten, welche Telekommunikationsnetzwerkelemente (4, 5, 7, 8, 10, 11) unterschiedlicher Telekommunikationsnetzwerke (3, 6, 9) behandeln,
(ii)zwischen der einzelnen logischen Datenbank (12) und den Teilnehmerdaten, welche die Telekommunikationsnetzwerkelemente (4, 5, 7, 8, 10, 11) der Telekommunikationsnetzwerke (3, 6, 9) behandeln, und
(iii) zwischen den Teilnehmerdaten, welche die Telekommunikationsnetzwerkelemente (4, 5) eines einzelnen Telekommunikationsnetzwerkes (3) behandeln.

8. Verfahren nach Anspruch 7 **dadurch gekennzeichnet, dass** die Zeichengabe zwischen den unterschiedlichen Telekommunikationsnetzwerken (3, 6, 9) übertragen wird.

9. Verfahren nach Anspruch 7 oder 8,
**dadurch gekennzeichnet, dass** die Datentypen zwischen dem Telekommunikationsnetzwerk (3, 6, 9) und der Datenbank (12) umgewandelt werden.

10. Verfahren nach einem der Ansprüche 7 - 8,
**dadurch gekennzeichnet, dass** ein Serviceprofil für den Teilnehmer gebildet wird.
